# FASCICULE DE BREVET EUROPEEN

(11) **EP 0 597 940 B1**
(45) Date de publication et mention de la délivrance du brevet: **14.06.1995**
(21) Numéro de dépôt: 92916469.7
(22) Date de dépôt: 20.07.1992
(51) Int. Cl.: B60C 23/04

(54) **PROCEDE D'EXPLOITATION DES MESURES DE PRESSION ET DE TEMPERATURE DANS UN SYSTEME DE SURVEILLANCE DE PNEUMATIQUES**
VERFAHREN ZUR AUSWERTUNG VON DRUCK- UND TEMPERATURMESSUNG IN EINER REIFENDRUCKUEBERWACHUNGSEINRICHTUNG
METHOD FOR PROCESSING PRESSURE AND TEMPERATURE MEASUREMENTS IN A TYRE MONITORING SYSTEM

(30) Priorité: 08.08.1991 FR 9110224
(43) Date de publication de la demande: 25.05.1994
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: HEBERT, Jacques, F-92210 S.-Cloud (FR)
(74) Mandataire: Bauvir, Jacques
(86) Numéro de dépôt international: FR9200709
(87) Numéro de publication internationale: WO9302876

(56) Documents cités:
- EP-A- 0 221 522
- EP-A- 0 315 885
- EP-A- 0 341 226
- EP-A- 0 374 770
- US-A- 4 186 377

## Description

La présente invention se rapporte aux systèmes de surveillance des pneumatiques. Plus particulièrement, elle concerne l'exploitation des mesures faites sur les pneumatiques en vue de donner une ou plusieurs alarmes.

Le but des sytèmes de surveillance des pneumatiques est d'alerter le conducteur de toute anomalie pouvant survenir à ces ou à l'un de ces pneumatiques, et ceci aussitôt que possible et de façon aussi fiable que possible. Parmi les paramètres de fonctionnement du pneumatique que l'on souhaite observer, il y a bien sûr la quantité d'air de gonflage du pneumatique. Celle-ci peut diminuer soit suite à une crevaison, soit de par le dégonflement naturel par diffusion au travers du pneumatique lui-même, qui n'est jamais infiniment étanche à l'air. Or la mesure directe de la quantité d'air enfermé dans le pneumatique n'étant pas possible, on y accède par les mesures de pression et de température. Le brevet US 4 703 650 décrit un dispositif de codage utilisable pour la transmission de la pression et de la température d'un pneumatique depuis la roue vers le véhicule.

Pour livrer au conducteur une information fiable et utile, il est souhaitable de ne pas se contenter d'afficher les valeurs décodées des mesures de pression et de température, La consultation permanente de ces indications risque d'être fastidieuse et/ou leur interpétation problématique. Ces mesures sont influencées par des perturbations diverses comme la chaleur dégagée par les freins ou au contraire le refroidissement provoqué par la jante, comme les transferts de charge qui provoquent de légères vartiations du volume des pneumatiques, ou comme l'échauffement du pneumatique dû à ses pertes hystérétiques.

C'est pourquoi on a proposé, dans le brevet US 4 893 110 un procédé d'exploitation des mesures basé sur des comparaisons entre deux ou plus de deux pneumatiques qui vise à pouvoir donner une alarme en cas de défaillance d'un pneumatique sans adopter des seuils d'alerte s'écartant trop de la précision atteinte par le dispositif de codage/décodage.

Ce traitement, quoique fort utile, ne permet pas de se rendre compte d'une perte de pression affectant quasi également tous les pneumatiques, ce qui est le plus souvent le cas pour le dégonflement naturel des pneumatiques. Aussi il est souhaitable d'effectuer en outre un traitement des mesures disponibles spécifique pour l'observation du dégonflement naturel.

C'est pourquoi il est proposé un procédé d'exploitation des signaux dans un système de surveillance des pneumatiques d'un véhicule, ledit système délivrant au moins une mesure de la température relevée pour chacun des pneumatiques, ledit système calculant un estimateur de la masse d'air contenue dans chaque pneumatique, caractérisé en ce que :
- on établit une série comprenant les températures relevées sensiblement au même moment au moins pour chaque pneumatique assurant la liaison du véhicule avec le sol,
- on calcule l'écart entre la température maximale et la température minimale parmi la série des températures relevées,
- lorsque ledit écart est inférieur à un seuil prédéterminé, on compare, pour chaque pneumatique, l'estimateur de la masse d'air contenue dans le pneumatique à une valeur considérée comme minimale nécessaire,
- on active une alarme si l'un de ces estimateurs est inférieur à ladite valeur minimale.

Il s'agit donc de sélectionner une mesure de la pression faite à un moment où celle-ci est la plus précise. On atteint le maximum de précision en régime thermique établi, et mieux encore, lorsque en outre le véhicule est immobile. Or le dégonflement naturel des pneumatiques est un phénomène lent. Il suffit de le contrôler de temps en temps pour en avoir une surveillance suffisante.

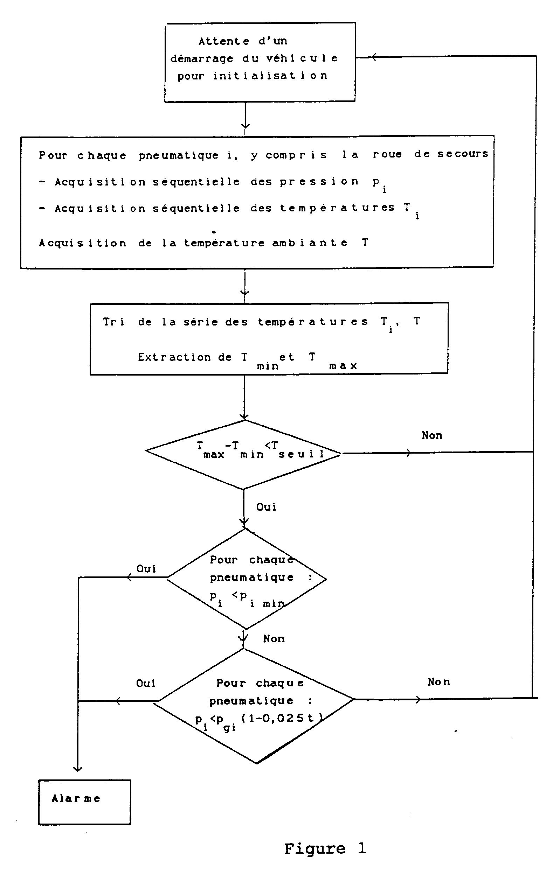

La suite de la description permet, avec l'illustration sous forme d'organigramme jointe (voir figure 1), de bien comprendre une mise en oeuvre de l'invention.

L'étude expérimentale a montré que, en comparant les températures des pneumatiques entre elles, on obtenait une bonne indication du caractère établi du régime thermique. En outre, il est préférable de procéder à une vérification à froid plutôt qu'à chaud parce qu'une période longue d'utilisation du véhicule, à vitesse constante, est bien moins fréquente que les périodes longues de non utilisation du véhicule. Dès lors, on ajoute au critère de sensible équivalence des températures une exigence supplémentaire qui vise à ne procéder au contrôle de sous gonflage que à froid. On peut détecter la mise sous tension à chaque démarrage, ou bien on peut incorporer la température relevée au même moment pour la roue de secours dans la série des températures, ou bien encore on peut ajouter à ladite série des températures la température relevée au même moment à un ou plusieurs endroits quelconques du véhicule. On peut par exemple disposer à cet effet un capteur dans le boîtier du décodeur des signaux en provenance des roues. On peut cumuler ces diverses exigences, ce qui conduira à diminuer très fortement le nombre de surveillances spécifiques du dégonflement, tout en les rendant de plus en plus fiables.

Le critère global, cumulatif, permet donc de savoir si le véhicule est arrêté depuis longtemps. Même si on ne détecte pas tous les démarrages à froid et en régime établi, on en détecte suffisamment pour parvenir à une observation fine du phénomène lent qu'est le dégonflement naturel des pneumatiques. La cause d'alarme à laquelle on aboutit doit bien sûr se superposer à d'autres causes d'alarme repérant sélectivement la crevaison, on la surcharge, ou d'autres causes encore, pour procurer un système fiable de surveillance des pneumatiques.

A titre d'exemple, pour un écart d'au maximum 6°C entre la température minimale Tₘᵢₙ et la température maximale Tₘₐₓ parmi toutes les températures relevées, on peut conclure à un régime thermique établi. Ce seuil dépend évidement de la précision des capteurs.

Dès lors on procède au contrôle des quantités d'air à l'intérieur de chaque pneumatique i par le biais de la mesure de la pression pᵢ, comparée à la pression p_{i min} considérée comme minimale pour le pneumatique considéré. On peut bien sûr corriger la pression minimale en fonction de la température relevée, par exemple en fonction de la température ambiante relevée à l'intérieur du véhicule si cette mesure est celle ayant la précision la meilleure. De façon strictement équivalente, on peut estimer la qualité d'air par le rapport de la pression absolue divisée par la température absolue. Par rapport à la pression nominale, on peut tolérer environ 5 % de dégonflement.

L'invention propose également de comparer la pression résiduelle ou quantité d'air résiduelle telle que mesurée à chaque démarrage, à l'état théorique du même pneumatique que l'on obtient par calcul en fonction des données suivantes :
. pression p_{gi} correspondant à la quantité d'air introduite dans le pneumatique le jour du dernier gonflage ou ajustement de pression effectué,
. temps t écoulé depuis ce dernier gonflage, exprimé en mois,
. taux de dégonflement naturel considéré comme normal, à savoir par exemple 2,5 % par mois par rapport à la pression nominale, cette valeur incluant les tolérances sur la mesure.

La valeur considérée comme minimale est ici obtenue par calculs, au lieu d'être fixée à un seuil absolu. On compare, pour chaque pneumatique i, pᵢ à p_{gi} (1-0,025 t) où t est exprimé en mois, et on donne une alarme si pᵢ est plus petit que la valeur minimale calculée, diminuée d'un seuil prédéterminé, qui dans ce cas doit être choisi relativement faible, par exemple 3 %. Il est possible ainsi de détecter une étanchéïté insuffisante du pneumatique avant même que celui-ci ait atteint une pression considérée comme insuffisante. Cela permet une inspection et un entretien préventif, puisque la surveillance de pression roue par roue prend pour seuil une valeur correspondant à 86 % de la pression nominale ou même moins, et la surveillance du dégonflement naturel prend pour seuil une valeur correspondant à 95 % de la valeur nominale.

En conclusion, la présente invention propose d'effectuer de façon automatique un contrôle du dégonflement naturel des pneumatiques par l'exploitation de certaines mesures seulement, considérées comme relevées avec une plus grande fiabilité, et le cas échéant, de vérifier si le résultat obtenu peut être considéré comme correspondant à un taux de dégonflement naturel.

Un système de surveillance peut très avantageusement incorporer plusieurs causes d'alarmes : les pertes naturelles, comme proposé ici, le déséquilibre de gonflage par exemple sur un essieu comme proposé dans le brevet US 4 893 110, et une surveillance roue par roue par rapport à un seuil critique. Un tel système surveillant plusieurs critères améliore largement la sécurité globale.

## Revendications

1. Procédé d'exploitation des signaux dans un système de surveillance des pneumatiques d'un véhicule, ledit système délivrant au moins une mesure de la température relevée pour chacun des pneumatiques, ledit système calculant un estimateur de la masse d'air contenue dans chaque pneumatique, caractérisé en ce que :
- on établit une série comprenant les températures relevées sensiblement au même moment au moins pour chaque pneumatique assurant la liaison du véhicule avec le sol,
- on calcule l'écart entre la température maximale et la température minimale parmi la série des températures relevées,
- lorsque ledit écart est inférieur à un seuil prédéterminé, on compare, pour chaque pneumatique, l'estimateur de la masse d'air contenu dans le pneumatique à une valeur considérée comme minimale nécessaire,
- on active une alarme si l'un de ces estimateurs est inférieur à ladite valeur minimale.

2. Procédé selon la revendication 1, caractérisé en ce que ladite valeur minimale nécessaire est fonction de la température du pneumatique considéré.

3. Procédé selon la revendication 1, caractérisé en ce que l'estimateur de la masse d'air est constitué par le rapport de la pression absolue divisée par la température absolue.

4. Procédé selon la revendication 1, caractérisé en ce que l'estimateur de la masse d'air est constitué par la pression absolue.

5. Procédé selon l'une des revendications 1 à 4, caractérisé en ce qu'il est exécuté au moment de chaque démarrage du véhicule.

6. Procédé selon l'une des revendications 1 à 5, caractérisé en ce que la température relevée au même moment pour la roue de secours est incluse dans la série des température relevées pour chaque pneumatique.

7. Procédé selon l'une des revendications 1 à 5, caractérisé en ce que l'on ajoute à ladite série de températures, la température relevée au même moment par un capteur disposé sur le véhicule.

8. Procédé selon l'une des revendications 1 à 7, caractérisé en ce que ladite valeur considérée comme minimale est établie en fonction de la quantité d'air introduite le jour du dernier gonflage, et en fonction du temps écoulé depuis le dernier gonflage, et en fonction du taux de dégonflement naturel considéré comme normal.

## Claims

1. A process of using signals in a tyre monitoring system of a vehicle, said system providing at least one measurement of the temperature recorded for each of the tyres, said system calculating an estimator of the mass of air contained in each tyre, characterised in that:
- a series is established which includes the temperatures recorded at substantially the same moment at least for each tyre linking the vehicle to the ground,
- the difference is calculated between the maximum temperature and the minimum temperature among the series of recorded temperatures,
- when said difference is lower than a predetermined threshold, comparison is made, for each tyre, of the estimator of the mass of air contained in the tyre to a value considered as the required minimum,
- an alarm is activated if one of these estimators is lower than said minimum value.

2. A process according to Claim 1, characterised in that said required minimum value is a function of the temperature of the tyre in question.

3. A process according to Claim 1, characterised in that the estimator of the mass of air is formed by the ratio of the absolute pressure divided by the absolute temperature.

4. A process according to Claim 1, characterised in that the estimator of the mass of air is formed by the absolute pressure.

5. A process according to one of Claims 1 to 4, characterised in that it is effected at the moment of each start-up of the vehicle.

6. A process according to one of Claims 1 to 5, characterised in that the temperature recorded at the same time for the spare wheel is included in the series of temperatures recorded for each tyre.

7. A process according to one of Claims 1 to 5, characterised in that the temperature recorded at the same time by a sensor located on the vehicle is added to said series of temperatures.

8. A process according to one of Claims 1 to 7, characterised in that said value considered as minimum is calculated as a function of the quantity of air introduced on the day of the most recent inflation, and as a function of the time elapsed since the most recent inflation, and as a function of the rate of natural deflation considered to be normal.

## Patentansprüche

1. Verfahren zur Auswertung von Signalen in eimem Überwachungssystem für Luftreifen eines Fahrzeugs, welches System für jeden Luftreifen wenigstens eine aufgenommene Temperaturmessung ausgibt und eine Schätzfunktion für die in jedem Luftreifen enthaltene Luftmasse berechnet, dadurch gekennzeichnet, daß:
- eine Serie gebildet wird, die die im wesentlichen gleichzeitig wenigstens für jeden die Verbindung des Fahrzeugs mit dem Boden sicherstellenden Luftreifen aufgenommenen Temperaturen umfaßt,
- die Abweichung zwischen der Maximaltemperatur und der Minimaltemperatur in der Serie von aufgenommenen Temperaturen berechnet wird,
- wenn die Abweichung kleiner als ein vorgegebener Schwellwert ist, für jeden Luftreifen die Schätzfunktion für die im Luftreifen enthaltene Luftmasse mit einem als notwendiger Minimalwert angesehenen Wert verglichen wird,
- ein Alarm ausgelöst wird, wenn eine dieser Schätzfunktionen kleiner als dieser Minimalwert ist.

2. Verfahren nach Anspruch 1, dadurch gekennzeichnet, daß der Minimalwert eine Funktion der Temperatur des betrachteten Luftreifens ist.

3. Verfahren nach Anspruch 1, dadurch gekennzeichnet, daß die Schätzfunktion für die Luftmasse gebildet wird durch das Verhältnis von absolutem Druck zur absoluter Temperatur.

4. Verfahren nach Anspruch 1, dadurch gekennzeichnet, daß die Schätzfunktion für die Luftmasse gebildet wird durch den absoluten Druck.

5. Verfahren nach einem der Ansprüche 1 bis 4, dadurch gekennzeichnet, daß es bei jedem Anfahren des Fahrzeugs durchgeführt wird.

6. Verfahren nach einem der Ansprüche 1 bis 5, dadurch gekennzeichnet, daß die gleichzeitig für das Reserverad aufgenommene Temperatur in der Reihe von für jeden Luftreifen aufgenommenen Temperaturen enthalten ist.

7. Verfahren nach einem der Ansprüche 1 bis 5, dadurch gekennzeichnet, daß zu der Serie von Temperaturen die gleichzeitig von einem am Fahrzeug angeordneten Meßaufnehmer aufgenommene Temperatur hinzugefügt wird.

8. Verfahren nach einem der Ansprüche 1 bis 7, dadurch gekennzeichnet, daß der als Minimalwert angesehene Wert in Abhängigkeit von der am Tag des letzten Füllens eingefüllten Luftmenge, der seit dem Füllen verstrichenen Zeit und der als normal angesehenen Luftverlustrate bestimmt wird.
